# EUROPÄISCHE PATENTSCHRIFT

(11) **EP 0 657 089 B1**
(45) Veröffentlichungstag und Bekanntmachung des Hinweises auf die Patenterteilung: **11.12.1996**
(21) Anmeldenummer: 93917721.8
(22) Anmeldetag: 02.08.1993
(51) Int. Cl.: H05B 39/04

(54) **ANLAUFSCHALTUNG FÜR ELEKTRONISCHE TRAFOS**
STARTING CIRCUIT FOR ELECTRONIC TRANSFORMERS
CIRCUIT DE DEMARRAGE POUR TRANSFORMATEURS ELECTRONIQUES

(30) Priorität: 28.08.1992 DE 4228647
(43) Veröffentlichungstag der Anmeldung: 14.06.1995
(73) Patentinhaber: Tridonic Bauelemente GmbH, A-6850 Dornbirn (AT)
(72) Erfinder: PRIMISSER, Norbert, A-6833 Fraxern 171 (AT); PICHLER, Bruno, A-6754 Klösterle (AT)
(74) Vertreter: Schmidt-Evers, Jürgen, Dipl.-Ing.
(86) Internationale Anmeldenummer: EP9302053
(87) Internationale Veröffentlichungsnummer: WO9406257

(56) Entgegenhaltungen:
- EP-A- 0 264 765
- EP-A- 0 466 031
- GB-A- 2 204 191

## Beschreibung

Die vorliegende Erfindung betrifft einen elektronischen Transformator für NiedervoltLampen.

Ein solcher Transformator ist beispielsweise in der DE-A-40 21 640 beschrieben.

Bei der bekannten Schaltung wird von der Ausgangsseite des Gleichrichters eine Spannung abgleitet (Halbwellen der Netzspannung), mit der ein Ladekondensator gespeist wird. Die an dem Kondensator liegende Spannung wird einem Triggerelement zugeführt, welches die Aufgabe hat, die selbstschwingende Wechselrichterschaltung mit einer Frequenz von 100Hz neu anzustoßen. Bei dem erwähnten Stand der Technik ist als Triggerelement ein Diac verwendet.

Ein solches Diac hat eine Zündspannung von etwa 32V. Das bedeutet, daß das Diac erst dann zündet, wenn die betreffende Halbwelle 32V erreicht hat. Dies wiederum hat zur Folge, daß zwischen den Halbwellen eine Totzeit auftritt. In Folge dieser Totzeit wird die Kurvenform des vom Gleichrichter aufgenommenen Netzstromes in Abweichung vom Sinus verzerrt, mit dem Resultat, daß Oberwellen entstehen, die ins Netz zurückgestrahlt werden. Diese Oberwellen sind unerwünscht und müssen gemäß Norm-Bestimmungen unterdrückt werden.

Darüber hinaus wurde festgestellt, daß sich beim Einsatz von Feldeffekttransistoren Unsicherheiten beim Triggern ergeben. Diese Triggerunsicherheiten werden durch die Threshold-Spannung der Feldeffekttransistoren verursacht, die bei etwa 1,5 bis 4,5 Volt liegt. Dieser Schwellenwert definiert, daß Feldeffekttransistoren erst nach Übersteigen der Gate-Spannung über diesen Spannungswert in Funktion treten. Da Diacs einen Spannungshub von üblicherweise nur 5 Volt aufweisen, die damit nur knapp über der Threshold-Spannung von 4,5Volt liegen, ergeben sich die besagten Triggerunsicherheiten. Als Spannungshub wird der Spannungsbereich zwischen der Durchbruchspannung und derjenigen Spannung des Trigger-Elements definiert, auf die die Spannung nach dem Durchbruch zurückgeht, um danach etwa linear wieder anzusteigen.

Die Aufgabe der vorliegenden Erfindung besteht darin, die Kurvenform des aus dem Netz aufzunehmenden Stromes möglichst wenig zu verzerren, die Verlustleistung gering zu halten und die Triggersicherheit zu erhöhen.

Diese Aufgabe wird erfindungsgemäß durch die kennzeichnenden Merkmale des Anspruchs 1 gelöst.

Vorteilhafte Ausgestaltungen der Erfindung sind in den Unteransprüchen angegeben.

Die Erfindung wird nachfolgend anhand von Ausführungsbeispielen näher erläutert. Es zeigen
Fig. 1 ein Schaltungsdiagramm eines Ausführungsbeispieles der Erfindung,
Fig. 2 ein Strom- Spannungsdiagramm eines Trigger-Elements;
Fig. 3 ein Schaltungsdiagramm eines weiteren Ausführungsbeispiels der Erfindung; und

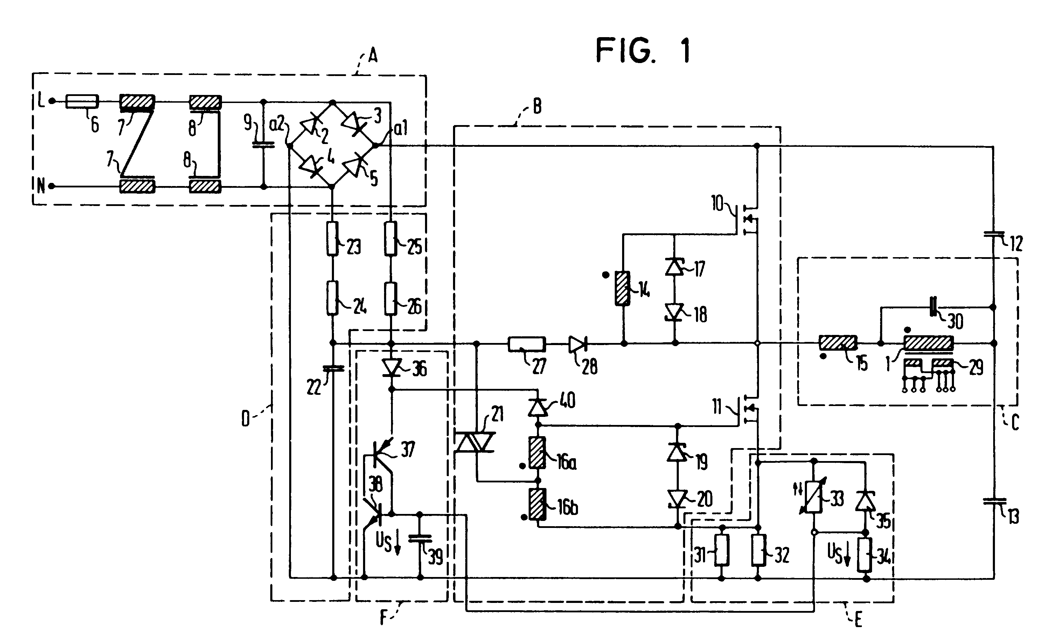

Figur 1 zeigt beispielhaft eine Schaltung zur Ansteuerung eines Transformators 1, der in der Zeichnung nicht dargestellte Niedervoltlampen, auch als Halogenlampen bezeichnet, mit einer Wechselspannung von üblicherweise 12 Volt speist. Zur besseren Erläuterung der in Figur 1 gezeigten Schaltung ist diese in mehrere funktionelle Blöcke A-F aufgeteilt.

Block A zeigt eine Gleichricherschaltung mit vier Gleichrichterdioden 2-5, die als Brückengleichrichter geschaltet sind. Gespeist werden diese Dioden 2-5 von einer am Eingang der Gleichrichterschaltung anliegenden Netzwechselspannung. Zum Schutz der Schaltung ist in einer Eingangsleitung eine Sicherung 6 vorgesehen, die beim Überschreiten eines maximal zulässigen Stroms abschaltet. Im Eingangskreis befinden sich darüberhinaus Drosseln bzw. Spulen 7,8 zur Funkentstörung, die aufgrund bestimmter Richtlinien und Normen notwendig ist. Vorzugsweise werden in jeder Eingangsleitung des Gleichrichters Induktivitäten geschaltet, die wie in Figur 1 gezeigt, in einem Fall gegensinnig 7 und im anderen Fall gleichsinnig 8 gekoppelt sind. Zur Unterdrückung von hochfrequenten Rückstrahlungen ins Versorgungsnetz sind die beiden Eingangsleitungen über einen Kondensator 9 miteinander verbunden.

Aus der Druckschrift EP-A-0264765 ist ein selbstschwingender Wechselrichter für eine Niedervoltlampe bekannt, der eine Serienschaltung aus zwei steuerbaren Schaltern, die die beiden an eine gleichgerichtete Wechselspannung anzuschließenden Eingänge des Wechselrichters verbindet, aufweist. Des weiteren weist der Wechselrichter zwei Steuerkreise zur Steuerung jeweils eines der beiden Schalter auf, die mit dem jeweils zu steuernden Schalter verbunden sind und jeweils eine Sekundärwicklung eines Übertragers beinhalten, dessen Primärwicklung in einem an den Wechselrichter anzuschließenden und die Lampe aufweisenden Lastkreis liegt, wobei eine von einem Steuerkreis an den entsprechenden Schalter angelegte Steuerspannung zum Schalten des entsprechenden Schalters eine bestimmte Schwellenspannung überschreiten muß. Zudem umfaßt der Wechselrichter ein Triggerelement, das mit einem der beiden zu steuernden Schalter verbunden ist, wobei die Durchbruchspannung des Triggerelements kleiner als 32V ist und das Triggerelement einen Spannungshub aufweist, der größer ist als die Schwellenspannung des mit dem Triggerelement verbundenen Schalters, wobei der Spannungshub den Spannungsbereich zwischen der Durchbruchspannung und derjenigen Spannung angibt, auf die die Spannung des Triggerlements nach dem Durchbruch zurückgeht.

Die zwischen den Ausgängen a1, a2 des Gleichrichters A liegende gleichgerichtete Wechselspannung wird einem Wechselrichter B zugeführt, der in dem beschriebenen Ausführungsbeispiel als selbstschwingender Wechselrichter ausgeführt ist. Selbstverständlich können auch zwangsgesteuerte Wechselrichter eingesetzt werden, die jedoch einen komplizierten und teuren Aufbau resultierend aus der notwendigen Ansteuerungsschaltung erfordern.

Der Aufbau und die Funktionsweise eines solchen Wechselrichters ist dem Fachmann allgemein bekannt, weshalb im folgenden nicht detailliert darauf eingangen wird.

Zwischen den beiden Eingangsleitungen des Wechselrichters liegt eine aus zwei steuerbaren Schaltern 10, 11, vorzugsweise Transistoren oder Feldeffekttransistoren (bspw. MOS-FET's) gebildete Serienschaltung. Ebenfalls zwischen den Eingängen liegt eine Serienschaltung aus zwei Kondensatoren 12, 13, wobei die beiden Serienschaltungen 10, 11 bzw. 12, 13 jeweils einen Brückenzweig bilden, die durch eine Last C miteinander verbunden sind. Der obere Feldeffekttransistor 10 wird über eine Sekundärwicklung 14 eines Übertragers, der zwischen der Source und dem Gate des FETs 10 liegt, angesteuert. Die Primärwicklung 15 des Übertragers liegt im Lastkreis C. Die Ansteuerung des unteren Feldeffekttransistors 11 weist einen der Ansteuerung des oberen Feldeffekttransistors entsprechenden Aufbau auf, wobei die Sekundärwicklung 16a, 16b jedoch in zwei in Serie geschaltete Wicklungen aufgeteilt ist. Um ein alternierendes Schalten der beiden Feldeffekttransistoren 10, 11 zu ermöglichen, ist die Sekundäwicklung 14 des oberen FETs gegensinnig zu derjenigen des unteren FETs 11 angeordnet. Zum Schutz der beiden Feldeffekttransistoren 10, 11 vor Überspannungen sind parallel zu den Sekundärwicklungen 14 bzw. 16 jeweils entgegengesetzt in Serie geschaltete Zehnerdioden 17, 18 bzw. 19, 20 angeordnet. Zwischen den beiden Sekundärwicklungen 16a, 16b greift ein Triggerelement 21 an, das den Wechselrichter mit der doppelten Netzfrequenz zum hochfrequenten Schwingen, vorzugsweise etwa 30kHz, mittels eines Triggersignals anregt. Normalerweise ist ein solches Triggern von selbstschwingenden Wechselrichtern nicht notwendig, da diese meist, wie bei Vorschaltgeräten für Gasniederdrucklampen, mit einer konstanten Gleichspannung versorgt werden, beispielsweise über einen Hochsetzsteller. Im vorliegenden Fall bekommt der Wechselrichter jedoch aus Kostengründen eine gleichgerichtete Wechselspannung zugeführt, die das selbstständige Schwingen nach jeder Halbwelle unterbrechen würde. Die Energie zum Triggern bekommt das Triggerelement 21 von einem Kondensator 22, der über einen am Netz angeschlossenen und aus jeweils zwei Widerständen 23, 24 bzw. 25, 26 bestehenden Spannungsteiler aufgeladen wird (Block D).Am Spannungsteilermittelabgriff ist auch eine aus einem Widerstand 27 und einer Diode 28 gebildete Serienschaltung angeschlossen, deren anderes Ende, nämlich die Kathode der Diode 28, an der Source des oberen Feldeffekttransistors 10 liegt.

Wie bereits angedeutet, verbindet der Lastkreis C die beiden Brückenzweige 10, 11 bzw. 12, 13. Im Lastkreis C selbst liegen die Primärwicklung 15 des Übertragers und ein Transformator 1 in Reihe. Der Transformator 1 versorgt über Sekundärwicklungen 29 die Niedervoltlampen mit der benötigten Spannung. Parallel zu diesem Transformator 1 liegt ein Kondensator 30, der die Aufgabe hat, die Verlustleistung der Feldeffekttransistoren 10, 11 zu senken.

In Serie zu den Feldeffekttransistoren 10, 11 liegt ein Strommeßglied E, das über mehrere Widerstände 31-34 die Source des unteren Feldeffekttransistors 11 mit dem am Ausgang des Gleichrichters a2 anliegenden Bezugspotential verbindet. Das Strommeßglied E umfaßt einen niederohmigen Widerstand 31, über den der Großteil des Laststroms fließt. Da dieser Strom sehr hoch sein kann, ist in der gezeigten Schaltung ein weiterer niederohmiger Widerstand 32 parallelgeschaltet, um die aufgenommene Leistung pro Widerstand zu verringern. An diesem Widerstand bzw. an diesen Widerständen 31, 32 fällt eine dem Lampenstrom proportionale Spannung ab, die über einen Spannungsteiler 33, 34 an eine Schutzschaltung F weitergeleitet wird. Der obere, vorzugsweise einstellbare, Widerstand 33 ist einer Zenerdiode parallelgeschaltet, die bei Übersteigen einer bestimmbaren an ihr abfallenden Spannung durchschaltet. Auf deren Zweck wird später noch eingegangen.

Die Schutzschaltung F umfaßt eine Serienschaltung aus einer Diode 36 und zwei komplementären Transistoren 37, 38, die so geschaltet sind, daß der Emitter des PNP-Transistors 37 an der Kathode der Diode 36 liegt, der Emitter dieses Transistors 37 zur Basis des zweiten NPN-Transistors 38 führt, dessen Kollektor wiederum mit der Basis des ersten Transistors 37 verbunden ist. Der Emitter des zweiten Transistors 38 liegt auf Bezugspotential, während die Anode der Diode 36 am Mittelabgriff des Spannungsteilers 23-26 angeschlossen ist. Das von dem Strommeßglied E gelieferte Signal wird der Basis des zweiten Transistors 38 zugeführt. Zwischen Basis und Bezugspotential liegt ein zum Schutz vorgesehener Kondensator 39.

Zwischen der Anode der Diode 36 und dem Gate des unteren Feldeffekttransistors 11 ist über eine weitere Diode 40, deren Anode am Gate anliegt eine Verbindung hergestellt.

Nun zur Funktionsweise der einzelnen Blöcke, wobei jedoch auf dem Fachmann bekannte Tatsachen, wie Funktion des Gleichrichters oder Wechselrichters nicht detailliert eingegangen wird.

Wie bereits erwähnt, muß der selbstschwingende Wechselrichter B getriggert werden, da aufgrund der dem Wechselrichter zugeführten gleichgerichteten Wechselspannung ein selbständiges Schwingen nur während einer Netzhalbwelle erfolgen würde. Um auf eine Triggerung verzichten zu können, müßte man dem Wechselrichter eine möglichst glatte Gleichspannung zur Verfügung stellen. Dazu wären Glättungsglieder am Ausgang des Gleichrichters, wie beispielsweise Elektrolydkondensatoren, erforderlich, die jedoch die Kurvenform des aufgenommenen Stroms verzerren würden. Die Folge davon wären ungünstige Rückstrahlungen ins Netz, die nur durch aufwendige Filterschaltungen zu vermeiden wären. Man ist also bestrebt, daß die Stromaufnahmekurve möglichst sinusförmig verläuft.

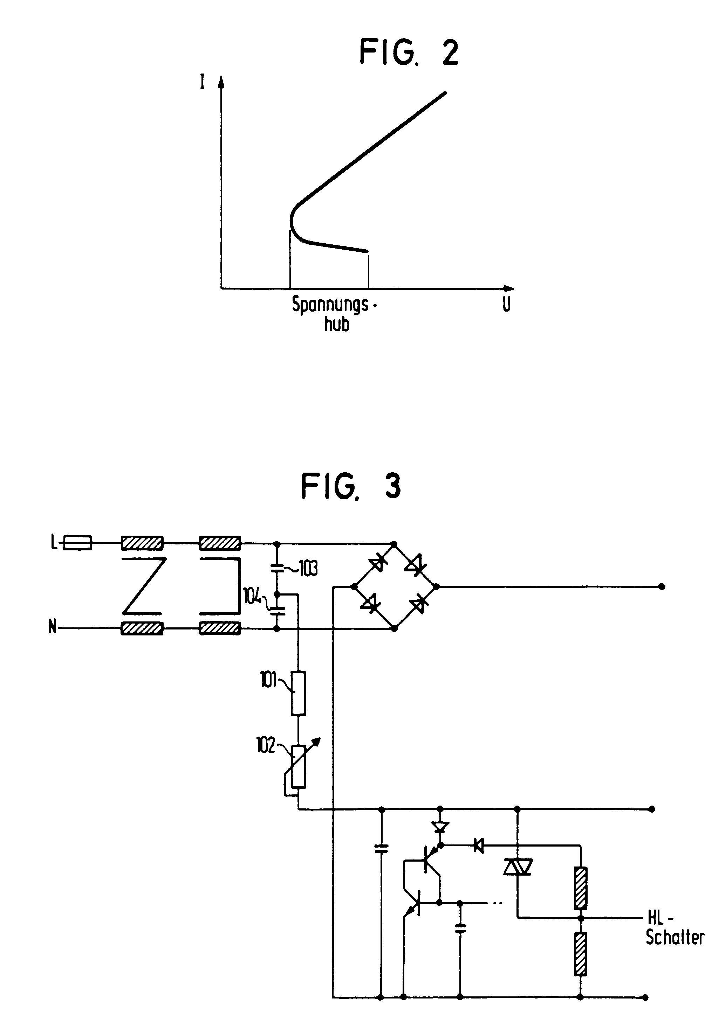

Die Triggerung erfolgt durch das Triggerelement 21, vorzugsweise ein SBS (Silicon Bilateral Switch, z. B. MBS 4991 Motorola) oder ein PUT (Programmable-Unit-Junction- Transistor) - Element. Diese liefern bei Überschreitung der an ihnen anliegenden Spannung über einen elementspezifischen Wert ein Spannungssignal an den Steuerkreis des unteren Feldeffekttransistors 11. Bei den eben benannten Triggerelementen liegen die Triggerspannungen deutlich unter der Triggerspannung eines DIACS, die etwa 32 V beträgt. So triggen die SBS-Elemente bei einer Spannung von 8 - 10 V und die PUT-Elemente ab 3V. Die Triggersignale werden mit doppelter Netzfrequenz zur Verfugung gestellt. Die notwendige Energie bezieht das Triggerelement 21 vom Kondensator 22, der über den Spannungsteiler 23 - 26 aufgeladen wird. Die Verlustleistung der Widerstände 23 - 26 des Spannungsteilers bestimmen sich unter anderem nach der zum Triggem notwendigen Spannung, d.h. je niedriger diese Spannung sein kann, desto geringer gestaltet sich die Verlustleistung. Andererseits benötigen die Feldeffekttransistoren 10, 11 einen bestimmten ersten höheren Spannungswert, die sogenannte threshold-Spannung (1,5 - 4,5 Volt), um in Funktion zu treten. Die Triggerelemente müssen demnach so beschaffen sein, daß sie einen Spannunghub aufweisen, der zumindest gleich oder größer als der erwähnte Schwellenspannungswert der FETs ist. Unter Spannungshub versteht man den Spannungsbereich zwischen der Durchbruchspannung und derjenigen Spannung des Triggerelements, auf die die Spannung nach dem Durchbruch zurückgeht, um danach linear wieder anzusteigen, wie in dem Strom-Spannungs-Diagramm der Figur 2 gezeigt.

DIACS besitzen üblicherweise einen Spannungshub von 5 V, ein SBS-Element dagegen 8 - 10 V und PUT-Elemente haben einen einstellbaren Spannungshub der auf jeden Fall auf über 5 V einstellbar ist.

In diesem Zusammenhang ist noch zu erwähnen, daß die Zweiteilung der Sekundärwicklung 16 im Steuerkreis des unteren Feldeffekttransistors 11 unter anderem aufgrund der geringen Triggerspannung vorgenommen wird, um ein Triggern des Triggerelements zwischen Halbwellen zu verhindern. Durch entsprechende Wahl des Wicklungsverhältnisses zwischen der oberen 16a und der unteren 16b Sekundärwicklung kann dies erreicht werden. Die Gesamtinduktivität der beiden Sekundärwicklungen 16 entspricht dabei derjenigen der Sekundärwicklung 14 im Steuerkreis des oberen Feldeffekttransistors 10.

Eine weitere Maßnahme zur Vermeidung von unkontrolliertem Triggern ist in Form der Diode 28 getroffen, die den Kondensator 22 regelmäßig, und zwar mit jeder Schwingung des Wechselrichters, über diese Diode 28 und den Feldeffekttransistor 11 entlädt und die am Kondensator 22 abfallende Spannung auf Null setzt. Während dieses Entladevorgangs fließt auch ein Strom über die Widerstände 22 - 26 des Spannungsteilers, der einen weiteren Beitrag zu der zuvor erwähnten Verlustleistung liefert. Die Widerstände 23 - 26 sind hochohmig zu wählen, wobei jedoch zu beachten ist, daß dadurch auch die Zeitkonstante des RC - Glieds der Widerstände 23 - 26 und des Kondensators 22 steigt. Die Zeitkonstante bestimmt eine Totzeit, die den Zeitraum zwischen Nulldurchgang der Netzhalbwelle und Zünden des Triggerlements definiert. Diese Totzeit sollte möglichst klein sein. Andererseits muß der Kondensator 22 eine Mindestkapazität aufweisen, die von der nötigen Energie zum Triggern abhängt.

Das Strommeßglied E dient zum Messen des Lampenstroms. Eine Schutzschaltung F, die das Signal des Meßgliedes E auswertet, soll die Wechselrichterschaltung vor zu hohen Strömen schützen, die aufgrund des besonderen Verhaltens von Niedervoltlampen bzw. allgemein von Lampen mit Glühwendeln kurz nach dem Einschalten auftreten können. Die Glühwendeln der Lampe haben bekanntlich einen sehr kleinen Widerstand solange sie kalt sind, der sich jedoch bei Erwärmung deutlich erhöht.

Die an den Widerständen 31, 32 abfallende durch den durch den Transformator 1 fließenden Strom verursachte Spannung wird von einem Spannungsteiler 33, 34 aufgenommen und an die Schutzschaltung F, und dort an die Basis des unteren Transistors 38, übermittelt. Überschreitet diese Spannung U_{S}, die proportional zum Lampenstrom ist, die Transistorschaltspannung, von in diesem Fall 0,7 Volt, schaltet dieser Transistor 38 durch, d.h. er leitet. Die Basis des oberen Transistors 37 ist nun gegenüber seinem Emitter negativ vorgespannt, wodurch auch dieser Transistor 38 leitet. Die Folge ist, daß sich der Kondensator 22 über die Diode 36 und die Transistoren 37, 38 entlädt und ein Neutriggern des Wechselrichters verhindert. Darüber hinaus liegt auch das Gate des unteren Feldeffekttransistors 11 über die Diode 40 und die Transistoren 37, 38 am Bezugspotential, wodurch die Schwingung des Wechselrichters unterbrochen wird. Die Unterbrechung, und damit auch die Versorgung der Lampen, erfolgt solange, bis der gemessene Strom wieder unter den vorbestimmten Grenzwert sinkt und der Wechselrichter wieder neu getriggert wird. Die Strommessung erfolgt ohne den Einfluß einer Grund-Gleichspannung, die sich an den Kondensatoren 12, 13 aufbaut.

Die zum oberen Widerstand 33 des Spannungsteilers des Meßglieds parallel angeordnete Zenerdiode 35 dient der schnellen Abschaltung bei Strom überhöhung. Sobald der von der Zenerdiode 35 vorgegebene Spannungswert, beispielsweise 2,4 Volt, überschritten wird, wird diese leitend und die volle Spannung von > 2,4 Volt der Schutzschaltung F zugeführt, die sofort reagiert und abschaltet. Mit Hilfe des einstellbaren Widerstands 33, vorzugsweise ein Potentiometer, läßt sich die Ansprechschwelle der Schutzschaltung F einstellen.

Figur 3 zeigt eine Variante der Schaltung aus Figur 1. Hierin ist der Block D mit Spannungsteiler und Triggerkondensator modifiziert ausgestaltet. Der aus vier Widerständen 23-26 bestehende Spannungsteiler gemäß Figur 1 wurde durch eine Serienschaltung aus zwei Widerständen 101, 102, wobei zumindest ein Widerstand 102 einstellbar ist, ersetzt. Die Serienschaltung liegt am Mittelabgriff einer Serienschaltung an, die aus zwei Kondensatoren 103, 104 gebildet wird und den in Figur 1 gezeigten Kondensator 9 zwischen den Eingängen des Gleichrichters ersetzt. Die Wirkung dieser geänderten Schaltung entspricht der Anordnung gemäß Figur 1.

## Patentansprüche

1. Selbstschwingender Wechselrichter für eine Last, insbesondere für eine Niedervoltlampe,
mit einer Serienschaltung aus zwei steuerbaren Schaltern (10, 11), die die beiden an eine gleichgerichtete Wechselspannung anzuschließenden Eingänge des Wechselrichters verbindet,
mit zwei Steuerkreisen zur Steuerung jeweils eines der beiden Schalter (10, 11), die mit dem jeweils zu steuernden Schalter (10, 11) verbunden sind und jeweils eine Sekundärwicklung (14, 16) eines Übertragers beinhalten, dessen Primärwicklung (15) in einem an den Wechselrichter anzuschließenden und die Last aufweisenden Lastkreis (C) liegt, wobei eine von einem Steuerkreis an den entsprechenden Schalter (10, 11) angelegte Steuerspannung zum Schalten des entsprechenden Schalters (10, 11) eine bestimmte Schwellenspannung überschreiten muß, und
mit einem Triggerelement (21), das mit einem der beiden zu steuernden Schalter (10, 11) verbunden ist, wobei die Durchbruchspannung des Triggerelements (21) kleiner als 32V ist und das Triggerelement (21) einen Spannungshub aufweist, der größer ist als die Schwellenspannung des mit dem Triggerelement verbundenen Schalters (10, 11), wobei der Spannungshub den Spannungsbereich zwischen der Durchbruchspannung und derjenigen Spannung angibt, auf die die Spannung des Triggerlements (21) nach dem Durchbruch zurückgeht,
**dadurch gekennzeichnet,**
daß die Sekundärwicklung des mit dem Triggerlement (21) verbundenen Steuerkreises auf zwei in Serie geschaltete gleichsinnig angeordnete Wicklungen (16a, 16b) aufgeteilt ist, an deren Mittelabgriff das Triggerelement (21) angreift.

2. Wechselrichter nach Anspruch 1,
**dadurch gekennzeichnet,**
daß das Triggerelement ein SBS (Silicon-Bilateral-Switch) oder ein PUT (Programmable-Unit-Junction-Transistor)-Triggerelement ist.

3. Wechselrichter nach Anspruch 1,
**dadurch gekennzeichnet,**
daß die steuerbaren Schalter (10, 11) Transistoren sind.

4. Wechselrichter nach Anspruch 3,
**dadurch gekennzeichnet,**
daß die steuerbaren Schalter (10, 11) Feldeffekttransistoren sind, und
daß der Spannungshub des Triggerelements (21) größer als 5V ist.

5. Wechselrichter nach einem der vorhergehenden Ansprüche,
**dadurch gekennzeichnet,**
daß die Sekundärwicklung (14) des einen Steuerkreises gegensinnig zu den Sekundärwicklungen (16a, 16b) des anderen Steuerkreises angeordnet ist.

6. Wechselrichter nach einem der vorhergehenden Ansprüche,
**dadurch gekennzeichnet,**
daß parallel zu einer mit dem Triggerlement (21) verbundenen Kapazität (22) eine Schutzschaltung (F) angeordnet ist, die das Triggerelement abschaltet, sobald der Laststrom einen vorgebbaren Wert überschreitet.

7. Wechselrichter nach Anspruch 6,
**dadurch gekennzeichnet,**
daß der Schutzschaltung (F) ein dem Laststrom proportionales Meßsignal zugeführt ist, entsprechend dem die Schutzschaltung bei Überschreiten eines Soll-Wertes die Kapazität (22) kurzschließt.

8. Wechselrichter nach Anspruch 1,
**dadurch gekennzeichnet, daß**
eine Serienschaltung aus zwei Kapazitäten (12, 13) parallel zu den Schaltern (10, 11) angeordnet ist, wobei eine Last den Mittelabgriff der Serienschaltung der beiden Schalter (10, 11) mit dem Mittelabgriff der Serienschaltung der beiden Kapazitäten (12, 13) verbindet.

9. Wechselrichter nach Anspruch 8,
**dadurch gekennzeichnet, daß**
die Last eine Primärwicklung (15) eines Transformators und einen Transformator (1) zur Versorgung der Niedervoltlampe aufweist.

## Claims

1. Free running inverter for a load, in particular for a low-voltage lamp,
having a series circuit of two controllable switches (10, 11) which connect the two inputs of the inverter to be connected to a rectified a.c. voltage,
having two control circuits, each for controlling a respective one of the two switches (10, 11), which are connected with the respective switches (10,11) to be controlled and which contain respective secondary windings (14, 16) of a transformer the primary winding (15) of which lies in a load circuit (C) to be connected to the inverter and including the load, whereby a control voltage, applied from a control circuit to the corresponding switch (10, 11), for switching the corresponding switch (10, 11) must exceed a particular threshold voltage, and
having a trigger element (21) which is connected with one of the two switches to be controlled (10, 11), whereby the breakdown voltage of the trigger element (21) is smaller than 32V and the trigger element (21) has a voltage range which is greater than the threshold voltage of the switch (10, 11) connected with the trigger element, whereby the voltage range gives the voltage region between the breakdown voltage and that voltage to which the voltage of the trigger element (21) returns after the breakdown,
characterised in that,
the secondary winding of the control circuit connected with the trigger element (21) is divided into two series-connected windings (16a, 16b), arranged with the same winding sense, at the middle tap of which the trigger element (21) is connected.

2. Inverter according to claim 1,
characterised in that,
the trigger element is an SBS (silicon bilateral switch) or a PUT (programmable unit junction transistor) trigger element.

3. Inverter according to claim 1,
characterised in that,
the controllable switches (10, 11) are transistors.

4. Inverter according to claim 3,
characterised in that,
the controllable switches (10, 11) are field effect transistors, and the voltage range of the trigger element (21) is larger than 5V.

5. Inverter according to any preceding claim,
characterised in that,
the secondary winding (14) of one control circuit is arranged with the opposite winding sense to the secondary windings (16a, 16b) of the other control circuit.

6. Inverter according to any preceding claim,
characterised in that,
there is arranged parallel to a capacitance (22) connected with the trigger element (21) a protective circuit (F) which switches off the trigger element as soon as the load current exceeds a predeterminable value.

7. Inverter according to claim 6,
characterised in that,
the protection circuit (F) has supplied thereto a measuring signal proportional to the load current, in correspondence to which measuring signal the protection circuit short-circuits the capacitance (22) when a desired value is exceeded.

8. Inverter according to claim 1,
characterised in that,
a series circuit of two capacitances (12, 13) is arranged parallel to the switches (10, 11), whereby a load connects the middle tap of the series circuit of the two switches (10, 11) with the middle tap of the series circuit of the two capacitances (12, 13).

9. Inverter according to claim 8,
characterised in that,
the load includes a primary winding (15) of a transformer and a transformer (1) for supplying the low-voltage lamp.

## Revendications

1. Onduleur autonome pour une charge, en particulier une lampe basse tension, comprenant :
un montage serie de deux interrupteurs (10, 11) commandés, qui relie entre elles les deux entrées de l'onduleur auxquelles doit être appliquée une tension alternative redressée,
deux circuits de commande pour commander les deux interrupteurs (10, 11), respectivement, ces circuits étant reliés aux interrupteurs (10, 11) à commander, respectivement, et contenant chacun un enroulement secondaire (14, 16) d'un transformateur dont l'enroulement primaire (15) est disposé dans un circuit de charge (C) contenant la charge et devant être raccordé à l'onduleur, une tension de commande appliquée par un circuit de commande à l'interrupteur correspondant (10, 11) devant dépasser une tension de seuil déterminée en vue de l'actionnement de l'interrupteur correspondant (10, 11), et
un élément de déclenchement (21) qui est relié à l'un des deux interrupteurs (10, 11) à commander, la tension de claquage de l'élément de déclenchement (21) étant inférieure à 32V et l'élément de déclenchement (21) présentant une excursion de tension qui est plus grande que la tension de seuil de l'interrupteur (10, 11) relié à l'élément de déclenchement, l'excursion de tension indiquant la plage de tension entre la tension de claquage et la tension à laquelle la tension de l'élément de déclenchement (21) revient après le claquage,
caractérisé par le fait
que l'enroulement secondaire du circuit de commande relié à l'élément de déclenchement (21) est subdivisé en deux enroulements (16a, 16b) montés en série, qui sont disposés dans le même sens et dont la prise médiane est attaquée par l'élément de déclenchement (21).

2. Onduleur suivant la revendication 1,
caractérisé par le fait
que l'élément de déclenchement est un élément de déclenchement SBS (Silicon-Bilateral-Switch) ou PUT (Programmable-Unit-Junction-Transistor).

3. Onduleur suivant la revendication 1, caractérisé par le fait que les interrupteurs (10, 11) commandés sont des transistors.

4. Onduleur suivant la revendication 3, caractérisé par le fait que les interrupteurs (10, 11) commandés sont des transistors à effet de champ, et que l'excursion de tension de l'élément de déclenchement (21) est supérieure à 5V.

5. Onduleur suivant l'une des revendications précédentes,
caractérisé par le fait que
l'enroulement secondaire (14) de l'un des circuits de commande est disposé en sens contraire par rapport aux enroulements secondaires (16a, 16b) de l'autre circuit de commande.

6. Onduleur suivant l'une des revendications précédentes,
caractérisé par le fait
qu'un circuit de protection (F) qui coupe l'élément de déclenchement dès que le courant de charge dépasse une valeur prédéterminée est disposé en parallèle avec une capacité (22) reliée à l'élément de déclenchement (21).

7. Onduleur suivant la revendication 6, caractérisé par le fait qu'au circuit de protection (F) est appliqué un signal de mesure proportionnel au courant de charge, en fonction duquel le circuit de protection court-circuite la capacité (22) lorsqu'une valeur de consigne est dépassée.

8. Onduleur suivant la revendication 1,
caractérisé par le fait
qu'un montage série de deux capacités (12, 13) est monté en parallèle avec les interrupteurs (10, 11), une charge reliant la prise médiane du montage série des deux interrupteurs (10, 11) à la prise médiane du montage série des deux capacités (12, 13).

9. Onduleur suivant la revendication 8,
caractérisé par le fait
que la charge comprend l'enroulement primaire (15) d'un transformateur et un transformateur (1) pour l'alimentation de la lampe basse tension.
